# EUROPÄISCHE PATENTSCHRIFT

(11) **EP 0 610 611 B1**
(45) Veröffentlichungstag und Bekanntmachung des Hinweises auf die Patenterteilung: **15.10.1997**
(21) Anmeldenummer: 93250334.5
(22) Anmeldetag: 03.12.1993
(51) Int. Cl.: G01B 3/30, F16G 13/00

(54) **Kennzeichnungsanhänger für Rundgliederketten**
Characteristics indicator for round link chains
Indicateur de caractéristiques pour chaine à maillons ronds

(30) Priorität: 04.12.1992 DE 4241666
(43) Veröffentlichungstag der Anmeldung: 17.08.1994
(73) Patentinhaber: RUD-KETTENFABRIK RIEGER & DIETZ GMBH U. CO., 73432 Aalen (DE)
(72) Erfinder: Smetz, Reinhard, Dipl.-Ing. (FH), D-86720 Nördlingen (DE)
(74) Vertreter: Böning, Manfred, Dr.-Ing.

(56) Entgegenhaltungen:
- DE-U- 9 110 896
- FR-A- 2 586 801
- US-A- 2 471 961
- US-A- 3 041 735
- US-A- 4 150 488
- PATENT ABSTRACTS OF JAPAN vol. 9, no. 334 (P-417)(2057) 27. Dezember 1985 & JP-A-60 158 301 (TOSHIBA K.K.)

## Beschreibung

Die Erfindung betrifft einen Kennzeichnungsanhänger für Ketten aus Rundgliedern.

Derartige als scheibenförmige Informationsträger ausgebildete Kennzeichnungsanhänger dienen dazu, dem Benutzer von Kettengehängen ein Bild über die Güte bzw. Güteklasse der verwendeten Rundstahlkette, die Nenndicke der Kettenglieder und die von der Zahl der zu einem Gehänge gehörenden Stränge abhängigen zulässigen Tragfähigkeit zu vermitteln (DIN 685). Der Anwendungsbereich der bekannten Kennzeichnungsanhänger ist auf vorgegebene Abmessungen aufweisende, genormte Ketten-Güteklassen beschränkt, für die tabellenmäßig Kriterien für die Ablegereife vorgegeben sind. Das vorstehend skizzierte übliche Kennzeichnungssystem versagt, wenn Gehänge mit Kettensträngen nicht genormter Sonderabmessungen und -qualitäten eingesetzt werden sollen.

Der Erfindung liegt die Aufgabe zugrunde, einen Kennzeichnungsanhänger zu schaffen, der auch in Fällen der zuletzt genannten Art dem Benutzer die Möglichkeit bietet, ein Kettengehänge rechtzeitig, d.h. bei Erreichen eines bestimmten Verschleißzustandes, aus dem Verkehr zu ziehen. Diese Aufgabe wird erfindungsgemäß durch einen Kennzeichnungsanhänger gelöst, der an seinem Umfang mindestens eine über jeweils einen Schenkel der Glieder der Kette schiebbare Aussparung aufweist, deren lichte Weite gleich dem der Ablegereife entsprechenden, um einen Verschleißanteil gegenüber dem Nenndurchmesser d₀ reduzierten Ist-Durchmesser d_{A} des Schenkels ist.

Der erfindungsgemäße Kennzeichnungsanhänger bietet den Vorteil, daß er nicht nur wie bisher allgemein üblich eine Kennzeichnungsfunktion erfüllt, sondern darüber hinaus als Prüflehre genutzt werden kann und folglich eine laufende Kontrolle des Zustandes der Kette eines Kettengehänges ermöglicht.

Eine Prüflehre für Ketten aus Rundgliedern ist beispielsweise aus US-A-4 150 488 bekannt.

Die Erfindung wird im folgenden anhand mehrerer in der beigefügten Zeichnung dargestellter Ausführungsformen von Kennzeichnungsanhängern näher erläutert. Es zeigen:
Fig. 1 einen Kennzeichnungsanhänger für Ketten aus Rundgliedern einer bestimmten Nenndicke,
Fig. 2 einen Kennzeichnungsanhänger, der für Ketten aus Rundgliedern unterschiedlicher Nenndicke verwendet werden kann,
Fig. 3 einen Kennzeichnungsanhänger, mit dem zwei Verschleißgrößen überwacht werden können,
Fig. 4 einen modifizierten Kennzeichnungsanhänger, der ebenfalls als Prüflehre zur Ermittlung zweier Verschleißgrößen einsetzbar ist,
Fig. 5 eine Seitenansicht des Kennzeichnungsanhängers gemäß Figur 4 und
Fig. 6 einen weiteren Kennzeichnungsanhänger.

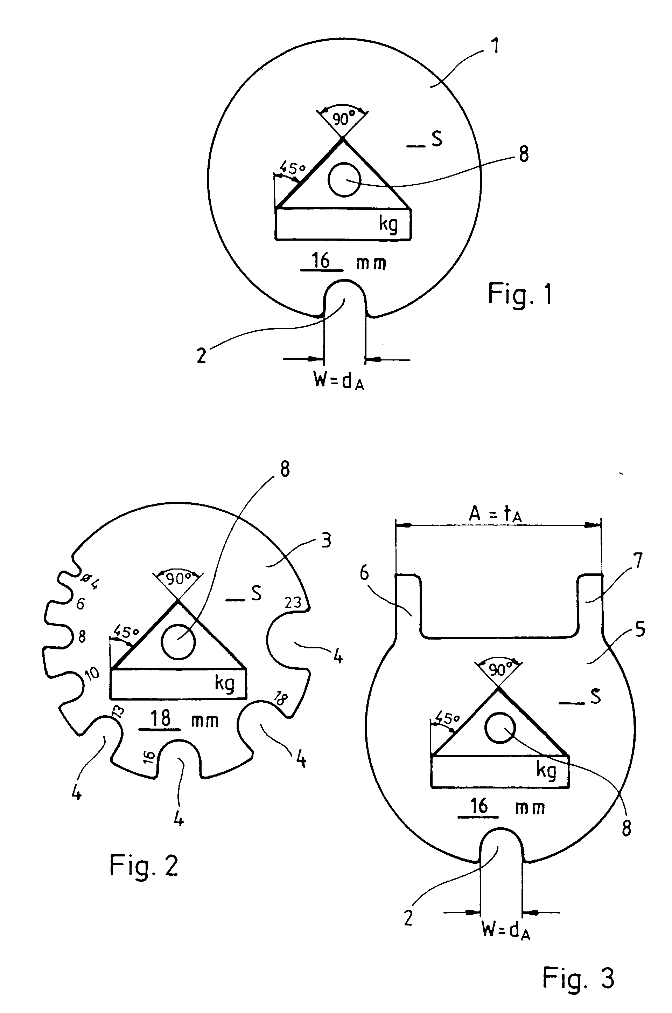

In Figur 1 ist 1 ein annähernd kreisrunder scheibenförmiger Informationsträger mit diversen die Tragfähigkeit, die Nenndicke der Kettenglieder und die Strangzahl enthaltenden Informationen, die dem jeweiligen Kettentyp entsprechen. An seinem Umfang ist der Informationsträger 1 mit einer Aussparung 2 versehen, deren lichte Weite W gleich dem der Ablegereife entsprechenden, um einen Verschleißanteil gegenüber dem Nenndurchmesser d₀ reduzierten Ist-Durchmesser d_{A} des jeweiligen Schenkels der Kettenglieder des zum Gehänge gehörenden Kettenstranges ist. Der Benutzer des Kettengehänges hat es folglich in der Hand, das Gehänge laufend auf seine Ablegereife zu überprüfen. Diese ist erreicht, wenn die Aussparung 2 über einen Schenkel der Kettenglieder des Kettenstranges schiebbar ist.

Während der Kennzeichnungsanhänger gemäß Figur 1 mit nur einer einzigen Aussparung versehen ist, weist der Kennzeichnungsanhänger gemäß Figur 2 einen scheibenförmigen Informtionsträger 3 mit einer Vielzahl von Aussparungen 4 unterschiedlicher Größe auf, von denen eine jede einem bestimmten Nenndurchmesser zugeordnet ist. Der Benutzer des Kennzeichnungsanhängers gemäß Figur 2 ist in diesem Fall gehalten, sich zur Verschleißkontrolle der Aussparung 4 zu bedienen, deren Durchmesserangabe auf dem Informationsträger dem Nenndurchmesser der Glieder der jeweils verwendeten Kette entspricht. Es ist dies im dargestellten Fall die zweitgrößte der am Umfang des Informationsträgers 3 angeordneten Aussparungen.

Der Kennzeichnungsanhänger gemäß Figur 3 wird von einem Informationsträger 5 gebildet, welcher wie im Falle der Figur 1 eine einzelne Aussparung 2 aufweist, darüber hinaus aber mit zwei Vorsprüngen 6 und 7 versehen ist, die eine Gabel bilden. Der Abstand A zwischen den Außenseiten der Vorsprünge 6 und 7 entspricht der Teilung t_{A} der Kettenglieder eines zum Kennzeichnungsanhänger gehörenden Kettenstranges, der ablegereif ist.

Da der Querschnitt der die Gabel bildenden Vorsprünge 6 und 7 hinreichend groß sein muß, um deren Abbrechen zu verhindern, eignet sich der in Figur 3 dargestellte Kennzeichnungsanhänger nicht für Ketten mit Gliedern kleiner Teilung.

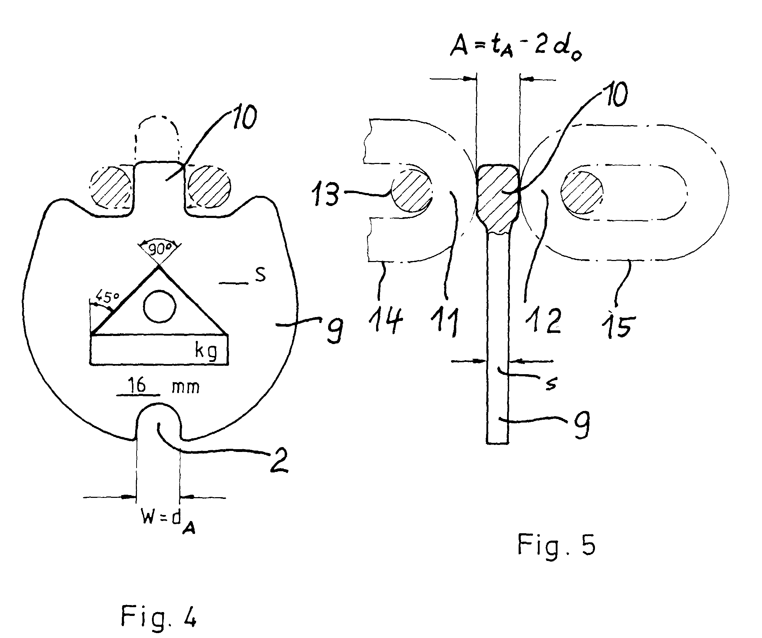

Für derartige Ketten empfiehlt sich vielmehr der Einsatz von Kennzeichnungsanhängern der in den Figuren 4 bis 6 dargestellten Art.

Der Kennzeichnungsanhänger gemäß den Figuren 4 und 5 bildet aus einem scheibenförmigen Informationsträger 9, der im Bereich seines Vorsprunges 10 eine Breite A hat, die größer ist als die Wandstärke s seines Hauptteiles und die gleich der um die doppelte Nenndicke d₀ der Glieder verminderten Teilung t_{A} der Glieder des ablegereifen Kettenstranges ist. Der Vorsprung 10 wird zur Überprüfung der Ablegereife des jeweiligen Kettenstranges so zwischen die Buge 11,12 zweier in ein Kettenglied 13 eingehängter Kettenglieder 14,15 eingeführt, wie dies in Figur 5 dargestellt ist, sobald er in den lichten Innenraum des Kettengliedes 13 paßt, ist der Kettenstrang ablegereif.

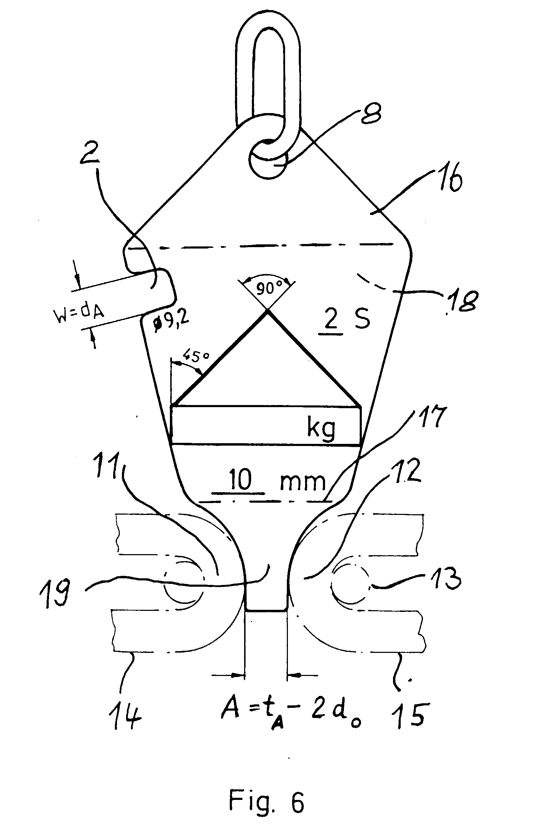

Eine besonders vorteilhafte Ausführungsform eines Kennzeichnungsanhängers zeigt die Figur 6. Der in dieser Figur dargestellte Informationsträger 16 besitzt einen über die kurze Grundlinie 17 eines durch strichpunktierte Linien angedeuteten trapezförmigen Abschnittes 18 vorstehenden Vorsprung 19, dessen gegen die Buge 11,12 der Kettenglieder 14,15 zur Anlage kommenden Seitenflächen senkrecht zu seinen sich gegenüberliegenden Außenflächen verlaufen. Auch in diesem Fall ist der Abstand A zwischen den gegen die Scheitelpunkte der Buge 11,12 der Kettenglieder 14,15 anliegenden Punkten der Seitenflächen des Vorsprunges 19 gleich der Differenz aus der die Ablegereife der jeweiligen Kette bestimmenden Teilung t_{A} und dem doppelten Nenndurchmesser d₀ der Kettenglieder im Neuzustand der Kette.

Sämtliche beschriebenen Informationsträger sind mit einem Loch 8 versehen, das ihre Befestigung mittels einer Schnur od.dgl. am jeweiligen Kettenstrang ermöglicht.

## Patentansprüche

1. Kennzeichnungsanhänger mit normkomformen Angaben für Ketten aus Rundgliedern, **dadurch gekennzeichnet**, daß er an seinem Umfang mindestens eine über jeweils einen Schenkel der Glieder der Kette schiebbare Aussparung (2;4) aufweist, deren lichte Weite (W) gleich dem der Ablegereife entsprechenden, um einen Verschleißanteil gegenüber dem Nenndurchmesser (d₀) reduzierten Ist-Durchmesser (d_{A}) des Schenkels ist.

2. Kennzeichnungsanhänger nach Anspruch 1, **dadurch gekennzeichnet**, daß er mit mehreren den Gliedern von Ketten unterschiedlicher Größe zugeordneten Aussparungen (4) versehen ist.

3. Kennzeichnungsanhänger nach Anspruch 1 oder 2, **dadurch gekennzeichnet**, daß er mit mindestens zwei eine Gabel bildenden Vorsprüngen (6,7) versehen ist, deren einander abgewandte Außenseiten einen Abstand (A) voneinander haben, der gleich der der Ablegereife entsprechenden Teilung (t_{A}) der Kettenglieder ist.

4. Kennzeichnungsanhänger nach Anspruch 1 oder 2, **dadurch gekennzeichnet**, daß er einen zwischen die Buge (11,12) zweier in ein Kettenglied (13) eingehängter Kettenglieder (14,15) einführbaren Vorsprung (10;19) aufweist, dessen gegen die Buge (11,12) zur Anlage kommenden Seitenflächen im Bereich der Scheitelpunkte der Buge (11,12) einen Abstand (A) voneinander haben, der gleich der um den doppelten Nenndurchmesser (d₀) der Glieder der Kette verminderten, der Ablegereife entsprechenden Teilung (t_{A}) der Glieder der Kette ist.

5. Kennzeichnungsanhänger nach Anspruch 4, **dadurch gekennzeichnet**, daß die gegen die Buge (11,12) der Kettenglieder (14,15) zur Anlage bringbaren Seitenflächen des Vorsprunges (10) parallel zu den sich gegenüberliegenden Außenflächen des Anhängers verlaufen.

6. Kennzeichnungsanhänger nach Anspruch 4, **dadurch gekennzeichnet**, daß die gegen die Buge (11,12) der Kettenglieder (14,15) zur Anlage bringbaren Seitenflächen des Vorsprunges (19) senkrecht zu den Außenflächen des Anhängers verlaufen.

7. Kennzeichnungsanhänger nach Anspruch 6, **dadurch gekennzeichnet**, daß er einen im wesentlichen trapezförmigen Abschnitt (18) aufweist, über dessen kurze Grundlinie (17) der Vorsprung (19) vorsteht.

## Claims

1. Marking label, having details which comply with the standards, for chains made of round links, characterized in that said label has on its circumference at least one cutout (2;4) which can be pushed over in each case one limb of the links of the chain and whose unobstructed width (W) is equal to that actual diameter (d_{A}) of the limb which corresponds to the need for replacement and is reduced by a wear element from the nominal diameter (d₀).

2. Marking label according to Claim 1, characterized in that said label is provided with a plurality of cutouts (4) which are assigned to the links of chains of different size.

3. Marking label according to Claim 1 or 2, characterized in that said label is provided with at least two projections (6,7) which form a fork and whose mutually averted outer sides are at a distance (A) from one another which is equal to that pitch (t_{A}) of the chain links which corresponds to the need for replacement.

4. Marking label according to Claim 1 to 2, charcterized in that said label has a projection (10;19) which can be inserted between the ends (11,12) of two chain links (14,15) which are attached to a chain link (13), the side surfaces of which projection (10;19) which come into contact with the ends (11,12) are at a distance (A) from one another in the region of the apex points of the ends (11,12), which distance (A) is equal to the pitch (t_{A}) of the links of the chain corresponding to the need for replacement reduced by twice the nominal diameter (d₀) of the links of the chain.

5. Marking label according to Claim 4, characterized in that those side surfaces of the projection (10) which can be brought into contact with the ends (11,12) of the chain links (14,15) run parallel to the mutually opposite outer surfaces of the label.

6. Marking label according to Claim 4, characterized in that those side surfaces of the projection (19) which can be brought into contact with the ends (11,12) of the chain links (14,15) run at right angles to the outer surfaces of the label.

7. Marking label according to Claim 6, characterized in that said label has an essentially trapezoidal section (18) beyond whose short base line (17) the projection (19) protrudes.

## Revendications

1. Indicateur signalétique à attacher portant des indications conformes aux normes, pour chaînes à maillons ronds, caractérisé en ce qu'il comprend, à sa périphérie, au moins un évidement (2;4) pouvant être emboîté par-dessus une branche respective des maillons de la chaîne, dont l'ouverture (W) est égale à un diamètre réel (d_{A}) de la branche, diminué d'un taux d'usure par rapport au diamètre nominal (d₀), correspondant ainsi à la côte d'usure de remplacement.

2. Indicateur signalétique à attacher selon la revendication 1, caractérisé en ce qu'il est pourvu de plusieurs évidements (4) associés aux maillons de chaînes de différentes sections.

3. Indicateur signalétique à attacher selon la revendication 1 ou 2, caractérisé en ce qu'il est pourvu d'au moins deux saillies (6,7) formant une fourche, dont les faces extérieures opposées l'une à l'autre présentent une distance (A) l'une par rapport à l'autre, qui est égale au pas (t_{A}) des maillons, correspondant à la côte d'usure de remplacement.

4. Indicateur signalétique à attacher selon la revendication 1 ou 2, caratérisé en ce qu'il comporte une saillie (10;19) pouvant être engagée entre les bouts arrondis (11,12) de deux maillons (14,15) s'accrochant dans un maillon (13), saillie dont les faces latérales venant en contact avec les bouts arrondis (11,12) présentent, au niveau des sommets des bouts arrondis (11,12), une distance (A) l'une par rapport à l'autre, qui est égale au pas (t_{A}) des maillons de la chaîne correspondant à la côte d'usure de remplacement, réduit du double du diamètre nominal (d₀) des maillons de la chaîne.

5. Indicateur signalétique à attacher selon la revendication 4, caractérisé en ce que les faces latérales de la saillie (10), qui peuvent être amenées en contact avec les bouts arrondis (11,12) des maillons (14,15), s'étendent parallèlement aux faces extérieures opposées de l'indicateur.

6. Indicateur signalétique à attacher selon la revendication 4, caractérisé en ce que les faces latérales de la saillie (19), qui peuvent être amenées en contact avec les bouts arrondis (11,12) des maillons (14,15), s'étendent perpendiculairement aux faces extérieures de l'indicateur.

7. Indicateur signalétique à attacher selon la revendication 6, caractérisé en ce qu'il présente une partie (18) essentiellement trapézoïdale, la saillie (19) se projetant au-delà de la petite ligne de base (17) de celle-ci.
